# EUROPÄISCHE PATENTSCHRIFT

(11) **EP 1 567 837 B1**
(45) Veröffentlichungstag und Bekanntmachung des Hinweises auf die Patenterteilung: **13.04.2016**
(21) Anmeldenummer: 03780098.4
(22) Anmeldetag: 02.12.2003
(51) Int. Cl.: G01F 25/00, G01F 13/00, G01F 15/00, B67C 3/00, B67C 3/20

(54) **VERFAHREN ZUR NACHLAUFMENGENREGELUNG BEI ABFÜLLANLAGEN**
METHOD FOR AFTER-RUN AMOUNT REGULATION IN FILLING UNITS
PROCEDE DE REGULATION DE QUANTITES DE COMPLEMENT DE NIVEAU DANS DES INSTALLATIONS DE SOUTIRAGE

(30) Priorität: 04.12.2002 DE 10256878
(43) Veröffentlichungstag der Anmeldung: 31.08.2005
(73) Patentinhaber: Endress + Hauser Flowtec AG, 4153 Reinach/BL (CH)
(72) Erfinder: BREITHAUPT, Hartmut, 74523 Schwäbisch-Hall (DE)
(74) Vertreter: Andres, Angelika Maria
(86) Internationale Anmeldenummer: PCT/EP2003/013542
(87) Internationale Veröffentlichungsnummer: WO 2004/051200

(56) Entgegenhaltungen:
- DE-A- 2 831 624
- DE-A- 19 701 001
- US-A- 5 515 888
- US-A- 5 975 747

## Beschreibung

Die Erfindung betrifft ein Verfahren zur Nachlaufmengenregelung bei Abfüllanlagen gemäß dem Oberbegriff des Anspruchs 1.

Ein solches Verfahren ist zum Beispiel aus US-A-5 975 747 bekannt.

In vielen Bereichen der Lebensmittel- und Pharmaindustrie werden Abfüllanlagen eingesetzt, um eine definierte Menge eines Mediums in ein Behältnis abzufüllen. Eine wesentliche Anforderung bei diesen Abfüllanlagen ist eine gleichbleibende Abfüllmenge die es bei immer kürzer werdenden Abfüllzeiten einzuhalten gilt.

So werden bei Hochleistungsgetränkeabfüllanlagen teilweise bis zu 65 000 Flaschen pro Stunde abgefüllt. Hier ist die Genauigkeit und Reproduzierbarkeit der Einzelabfüllung ein wesentliches Qualitätsmerkmal. Jede Über- bzw. Unterfüllung bedeutet einen finanziellen Verlust für den Anlagenbetreiber. Insbesondere müssen auch die gesetzlichen Anforderungen hinsichtlich Abweichungen vom Sollwert eingehalten werden.

Die abgefüllte Menge des Mediums wird mittels eines Dosierventils geregelt. Hierzu wird das Dosierventil von einer Steuerung entsprechend angesteuert. Zu einem gewissen Zeitpunkt wird das Dosierventil geöffnet und das Medium kann in den Behälter fließen, bis das Dosierventil zu einem späteren Zeitpunkt wieder geschlossen wird. Die Menge des Mediums wird mittels eines Durchflussmessers bestimmt. Hierfür gibt es zwei unterschiedliche Varianten, Volumen- bzw. Massedurchflussmesser. Bei dem Volumendurchflussmessgerät kann es sich beispielsweise um einen Promag 50 bzw. einen Dosimag 2 handeln. Als Massedurchflussmessgeräte können beispielsweise ein Promass 83 bzw. einen Dosimass 2 eingesetzt werden. Beide zuvor genannten Gerätetypen werden von der Firma Endress + Hauser angeboten und vertrieben.

Ein wesentlicher Aspekt den es bei Abfüllanlagen zu berücksichtigen gibt, ist die Nachlaufmenge. Unter der Nachlaufmenge ist diejenige Menge des Mediums zu verstehen, die nachdem das Dosierventil den Befehl Dosierventil schließen erhalten hat, noch nachfließt. Der Grund hierfür liegt darin, dass das Dosierventil nicht instantan schließt, sondern eine gewisse Schließzeit hat.

Für die Steuerung bedeutet dies, dass der Schließbefehl nicht erst erzeugt werden kann, wenn der Durchflussmesser die gewünschte Produktmenge erfasst hat, sondern bereits zu einem früheren Zeitpunkt. Die Steuerung muss den Schließbefehl für das Dosierventil genau zu dem Zeitpunkt erzeugen, bei dem die gerade gemessene Durchflussmenge + die gespeicherte Nachlaufmenge gerade der Sollmenge des Mediums entspricht.

Die exakte Nachlaufmenge für eine Einzelabfüllung kann nur aufwendig direkt gemessen werden. Sie ist auch von einer Vielzahl von Faktoren abhängig.

Wenn der Schließbefehl für das Dosierventil von der Steuerung zu früh erzeugt wird, liegt die abgefüllte Produktmenge unter dem Sollwert, der Schließbefehl muss deshalb später kommen. Im umgekehrten Fall, wenn der Schließbefehl zu spät kommt, fließt zu viel von dem Medium in den Behälter und der Schließbefehl muss früher kommen.

Die Regelung, die den genauen Zeitpunkt für den Schließbefehl des Dosierventils bestimmt, heißt Nachlaufmengenregelung. Ermittelt wird die Nachlaufmenge über mehrere Abfüllvorgänge. Liegt der Mittelwert der Einzelabfüllung über dem Sollwert, so muss die Öffnungsdauer des Dosierventils verkürzt werden. Über je mehr Abfüllvorgänge ermittelt wird, desto genauer kann der Zeitpunkt für den Schließbefehl bestimmt werden.

Ein Problem hierbei ist, dass die Nachlaufmenge von den Prozessbedingungen abhängt und somit zeitlich variieren kann. Insbesondere nach einem Maschinenstop kann sich die Nachlaufmenge stark verändern.

Aufgabe der Erfindung ist es deshalb, ein Verfahren zur Nachlaufmengenregelung bei Abfüllanlagen anzugeben, das auch bei Änderungen der Abfüllbedingungen eine genaue Dosierung der abgefüllten Produktmenge ermöglicht.

Gelöst wird diese Aufgabe durch das im Anspruch 1 angegebene Verfahren.

Die wesentliche Idee der Erfindung besteht darin, dass nach einer Veränderung der Abfüllbedingungen die Nachlaufmenge über die Mittelung von weniger Abfüllvorgängen als im Normalbetrieb erfasst wird.

Vorteilhafte Weiterentwicklung der Erfindung sind in den Unteransprüchen angegeben.

Eine Änderung der Abfüllbedingungen kann dann vorliegen, wenn ein Maschinenstop- bzw. ein Maschinenstartsignal vorliegt.

Gemäß der Erfindung erfolgt im Normalbetrieb die Mittelung über n >= 3 Abfüllvorgänge.
In vorteilhafter Weise erfolgt die Mittelung nach einer Veränderung der Abfüllbedingungen über m >= 1 Abfüllvorgänge.

Gemäß der Erfindung wird die Anzahl der Mittelungen m nach einer Änderung der Abfüllbedingungen dynamisch von 1 auf n erhöht.

Gemäß einer Weiterentwicklung der Erfindung wird eine Veränderung der Abfüllbedingungen dadurch signalisiert, dass die Zeitdauer zwischen zwei Abfüllvorgängen größer als ein bestimmter Grenzwert ist.
Nachfolgend ist die Erfindung anhand eines in der Zeichnung dargestellten Ausführungsbeispiels näher erläutert.

Es zeigen:
Fig. 1 schematische Darstellung einer Abfüllanlage;
Fig. 2 schematische Darstellung einer Abfüllkurve als Funktion der Zeit;

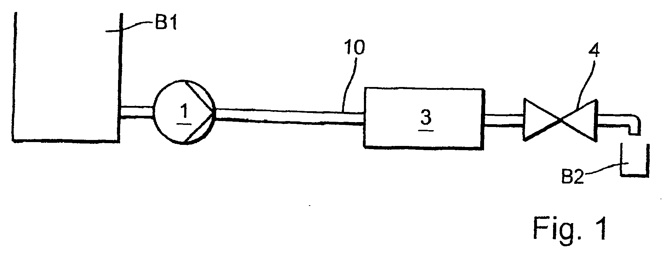

Fig. 1 zeigt eine schematische Darstellung einer Abfüllanlage, bei der ein fließfähiges Medium über eine Zuführleitung 10 von einem Behältnis B1 zu einem Behältnis B2 transportiert wird. In der Zuführleitung 10 sind eine Pumpe 1, ein Durchflussmesser 3 und ein Dosierventil 4 angeordnet. Der Durchflussmesser 3 ist über eine Signalleitung L1 mit einer Steuereinheit 20 verbunden. Das Dosierventil 4 wird von der Steuereinheit 20 über eine Signalleitung L2 angesteuert.

Bei Hochleistungsabfüllanlagen in der Getränkeindustrie kann es sich bei dem Behälter B2 z. B. um eine Getränkeflasche handeln. Die Zeitdauer für einen Abfüllvorgang bei Hochleistungsgetränkeabfüllanlagen beträgt ca. 1 Sekunde.

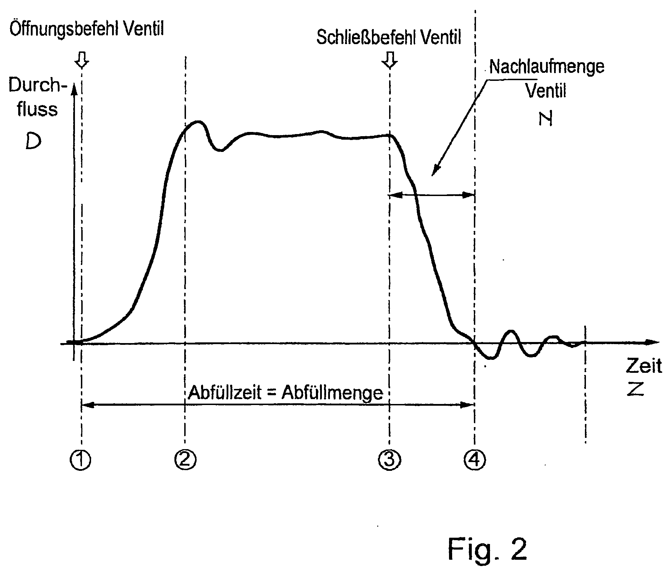

In Fig. 2 ist eine typische Abfüllkurve dargestellt. Aufgetragen ist die Durchflussmenge D in Abhängigkeit von der Zeit Z. Die in der Zeichnung dargestellten Ziffern kennzeichnen die Zeitpunkte für die folgenden Verfahrensschritten; 1. Befehl Dosierventil öffnen, 2. Dosierventil ist geöffnet, 3. Dosierventil schließen, 4. Dosierventil ist geschlossen. Die in das Behältnis B2 abgefüllte Produktmenge entspricht der Fläche unter der Kurve zwischen den Zeitpunkten 1 und 4. Wie aus der Fig. 2 klar ersichtlich ist, muss der Befehl Dosierventil schließen von der Steuereinheit 20 erzeugt werden, bevor der Durchflussmesser 3 die gewünschte Sollmenge des Produkts erfasst hat. Die Produktmenge, die zwischen den Zeitpunkten 3 und 4 in den Behälter B2 fließt bezeichnet man auch als Nachlaufmenge N.

Nachfolgend ist ein herkömmliches Verfahren zur Nachlaufmengenregelung näher erläutert. Die Nachlaufmenge für eine Einzelabfüllung wird über die Mittelung von n Abfüllvorgängen bestimmt. Diese Mittelung wird von der Steuereinheit 20 durchgeführt.
Aufgrund der genauen Bestimmung der Nachlaufmenge kann in der Steuereinheit 20 der Zeitpunkt für den Befehl "Dosierventil schließen" sehr exakt bestimmt werden.
Auch nach einer Veränderung der Abfüllbedingungen wird bei diesem Verfahren unverändert über n Abfüllvorgänge gemittelt.

Nachfolgend ist das erfindungsgemäße Verfahren anhand eines Beispieles erläutert, bei dem im normalen Betrieb der Abfüllanlage über n = 10 Abfüllvorgänge die Nachlaufmenge bestimmt wird. Nach einem Maschinenstop- bzw. Maschinenstartsignal wird die Anzahl der Mittelungen m gegenüber der Anzahl n im normalen Betriebszustand verringert. Im vorliegenden Fall entspricht m den Werten 1 bis 9. Da sich die Nachlaufmenge nach einem Maschinen- Startsignal langsam einem konstanten Wert asymptotisch nähert, wird die Anzahl der Mittelungen m dynamisch von 1 auf n=10 erhöht.

In der Regel werden Veränderungen der Abfüllbedingungen durch ein Anlagesignal signalisiert. Ein derartiges Anlagesignal kann z. B. ein Maschinenstart- bzw. ein Maschinenstartsignal sein.

Teilweise wird bei Abfüllanlagen kein Maschinenstopsignal erzeugt. In diesem Fall kann auf einen Maschinenstop geschlossen werden, wenn die Zeitdauer zwischen zwei Abfüllvorgängen länger als ein bestimmter Grenzwert ist. Häufig wird auch ein Maschinenstopsignal über ein externes Signal signalisiert.

## Patentansprüche

1. Verfahren zur Nachlaufmengenregelung einer Abfüllanlage, bei der im Normalbetrieb die Nachlaufmenge über die Mittelung von n Abfüllvorgängen erfasst wird, wobei gilt n≥3, **dadurch gekennzeichnet, dass** nach einem Anlagensignal, das Veränderungen der Abfüllbedingungen signalisiert, die Nachlaufmenge über die Mittelung von m<n Abfüllvorgängen erfasst wird, wobei die Anzahl m nach dem Anlagensignal dynamisch von 1 auf n erhöht wird.

2. Verfahren nach Anspruch 1, **dadurch gekennzeichnet, dass** das Anlagensignal ein Maschinenstop- oder Maschinenstart-Signal ist.

3. Verfahren nach einem der vorhergehenden Ansprüche, **dadurch gekennzeichnet, dass** ein Maschinenstop signalisiert wird, wenn die Zeitdauer zwischen zwei Abfüllvorgängen länger als ein Grenzwert ist.

4. Verfahren nach einem der vorhergehenden Ansprüche, **dadurch gekennzeichnet, dass** das Maschinenstop- oder Maschinenstart-Signal über ein externes Signal signalisiert wird.

## Claims

1. Procedure to regulate the drip quantity of a filling plant where the drip quantity is captured during normal operation by averaging n filling operations, wherein n ≥ 3, **characterized in that** after a plant signal that signals changes to the filling conditions the drip quantity is captured by averaging m < n filling operations, wherein the number m is dynamically increased from 1 to n after the plant signal.

2. Procedure as claimed in Claim 1, **characterized in that** the plant signal is a signal to stop or start the machine.

3. Procedure as claimed in one of the previous claims, **characterized in that** a machine stop is signaled if the time between two filling operations is longer than a limit value.

4. Procedure as claimed in one of the previous claims, **characterized in that** the machine stop signal or machine start signal is signaled via an external signal.

## Revendications

1. Procédé destiné à la régulation de la queue de chute d'une installation de remplissage, pour lequel la queue de chute est mesurée en fonctionnement normal en effectuant la moyenne de n remplissages, avec n ≥ 3, **caractérisé en ce qu'**après un signal de l'installation, qui signale des modifications des conditions de remplissage, la queue de chute est mesurée en effectuant une moyenne de m < n remplissages, le nombre m étant augmenté de 1 à n de façon dynamique après le signal de l'installation.

2. Procédé selon la revendication 1, **caractérisé en ce que** le signal de l'installation est un signal d'arrêt ou de démarrage de la machine.

3. Procédé selon l'une des revendications précédentes, **caractérisé en ce qu'**un arrêt machine est signalé lorsque la durée entre deux remplissages est supérieure à une valeur seuil.

4. Procédé selon l'une des revendications précédentes, **caractérisé en ce que** le signal d'arrêt ou de démarrage de la machine est acheminé par l'intermédiaire d'un signal externe.
